Europäisches Patentamt

European Patent Office

Office européen des brevets

(11) Numéro de publication: **0 018 328**
A2

## (12) DEMANDE DE BREVET EUROPEEN

(21) Numéro de dépôt: 80810129.9

(22) Date de dépôt: 17.04.80

(51) Int. Cl.³: **E 04 C 2/24,** E 04 C 3/29

(30) Priorité: 19.04.79 CH 3701/79

(43) Date de publication de la demande: 29.10.80
Bulletin 80/22

(84) Etats contractants désignés: **AT BE DE FR GB IT LU NL SE**

(71) Demandeur: **Procima S.A., Place de l'Ancien Port 8, CH-1800 Vevey (Canton de Vaud) (CH)**

(72) Inventeur: **Liechti, Louis, CH-1822 Chernex (Canton de Vaud) (CH)**
Inventeur: **Nydegger, Roland, Friedrichstrasse 9, CH-4000 Basel (Canton de Bâle-Ville) (CH)**

(74) Mandataire: **Bovard, Fritz Albert et al, Bovard & Cie Ingénieurs- Conseils ACP et Avocats Optingenstrasse 16, CH-3000 Berne 25 (CH)**

(54) Elément de construction préfabriqué.

(57) L'élément de construction se compose de deux planches (1 et 2) et d'une pièce de feutre (3) intercalée entre les deux planches (1 et 2). L'assemblage porteur est réalisé de préférence par collage. Les opérations de finition peuvent être effectuées après la réalisation de diverses moulures telles que la nervure (4) ou la rainure (5). L'élément peut servir à la réalisation de cadres de porte ou de fenêtre. Dans d'autres formes d'exécution utilisant des madriers, des briques ou des panneaux d'une autre structure, on peut réaliser des éléments de dalles plancher-plafond, des éléments de cloisons externes ou internes, des toitures, etc.

EP 0 018 328 A2

ACTORUM AG

Elément de construction préfabriqué.

On cherche à l'heure actuelle, dans le domaine de la construction des habitations, à développer des types de parois ou autres cloisons qui présentent des caractéristiques d'isolation phonique et thermique aussi élevées que possible. La recherche de solutions judicieuses à ce problème présente des difficultés par le fait que les matériaux qui présentent de bonnes caractéristiques d'isolation thermique présentent souvent de mauvaises caractéristiques d'isolation phonique, de sorte que leur utilisation ne permet pas d'atteindre des résultats satisfaisants au point de vue de la transmission des bruits. En outre, la réalisation de cloisons, que ce soit des façades, des cloisons intérieures ou des dalles séparant les étages d'une construction, implique, si on veut assurer de bonnes propriétés d'isolation aussi bien dans le domaine de la transmission des bruits que dans le domaine de la transmission de la chaleur, des opérations multiples et coûteuses ainsi que l'emploi fréquent de matériaux d'un prix élevé.

On sait que les matières formées de fibres présentent une capacité d'isolation thermique relativement élevée. Toutefois, on a constaté dans de nombreux cas, que des cloisons formées de deux panneaux rigides entre lesquels était placée une masse fibreuse, présentaient une très mauvaise capacité d'isolation au point de vue phonique en ce sens que l'air retenu entre les deux panneaux par la masse fibreuse transmettait les sons d'un panneau à l'autre et que, plus les panneaux étaient rigides, et plus leur fréquence critique était élevée, plus l'assemblage fonctionnait comme une caisse de résonance.

On a déjà proposé (brevet FR No 781 319) d'utiliser comme matériau de construction des assemblages formés d'un matelas de fibres ou de granules placés entre deux placages de feuilles de ciment, de bois ou de tôle. Toutefois, l'âme isolante prévue dans ce type de construction, étant d'épaisseur supérieure à celle des placages qui la contiennent, la capacité d'isolation phonique de ces assemblages connus était précisément sujette aux défauts mentionnés ci-dessus.

Selon le brevet belge No 466 030 on a aussi prévu de réaliser des panneaux constitués par deux ou plusieurs couches de voliges orientées perpendiculairement les unes aux autres, et clouées de part et d'autre de couches intercalaires de matière souple et imperméable comme par exemple du feutre bitumé. Un tel assemblage permet de réaliser des cloisons légères convenant à des constructions provisoires. On a constaté toutefois que l'imperméabilisation d'une couche de feutre avait pour conséquence de réduire considérablement les capacités d'isolation thermiques de ce matériau.

Selon le brevet FR No 23 46 515, il est connu de réaliser des éléments de construction composites jouant le rôle de piliers et formés d'un noyau de section rectangulaire en feutre de fibres minérales liées, ce noyau étant assemblé le long de ses deux petits côtés opposés, à des organes de bois. Toutefois, comme le feutre est un matériau ayant une structure planaire, son comportement mécanique diffère considérablement selon qu'il est lié à des éléments adjacents par sa tranche ou par l'une ou l'autre de ses faces principales, et l'expérience montre que des piliers du genre décrit dans le brevet précité dont la section du noyau est par exemple de 5 x 15 cm, présentent en fait une résistance au cisaillement qui reste inférieure à l'optimum désirable.

Finalement, on connait encore par le brevet FR No 21 61 442 des éléments de construction destinés à servir de parements ou de cloisons intérieures et constitués de deux plaques de plâtre ou d'agglomérés de particules de bois avec une couche de fibres par exemple de fibre de verre, intercalée entre les deux plaques. Les fibres peuvent constituer une pièce de feutre et être liées entre elles par le moyen d'élastomères. Cet élément de construction connu étant destiné essentiellement à des parements, l'idée qu'il était possible d'utiliser des pièces de feutre dans des éléments de construction préfabriqués et porteurs, c'est-à-dire présentant un module d'élasticité suffisamment élevé pour résister à la flexion et au flambage lorsqu'ils sont utilisés pour la réalisation de murs porteurs par exemple ou de dalles, n'en découle pas de façon évidente.

Ainsi, le but de la présente invention est de réaliser des éléments de construction préfabriqués présentant simultanément une grande résistance mécanique et des propriétés d'isolation thermique et phonique élevées permettant de réaliser avec un minimum d'opérations de montage, des murs porteurs, des dalles plancher-plafond et d'autres structures porteuses dans la construction des maisons d'habitation.

Dans ce but, la présente invention a pour objet un élément de construction préfabriqué, notamment pour la réalisation de murs ou de dalles plancher-plafond, caractérisé en ce qu'il comporte au moins un assemblage porteur à haute capacité d'isolation phonique et thermique, formé d'une pièce de feutre et de deux plaques de bois rigides qui recouvrent les faces opposées de la pièce de feutre,

4    0018328

et qui sont liées à celle-ci par collage.

On précisera d'emblée que, par feutre, on entend tous les matériaux qui sont essentiellement formés de fibres de longueur limitée, liées les unes aux autres par un moyen quelconque et disposées sous des angles variés par rapport au plan général de la pièce. Une pièce de feutre, au sens de la présente demande est donc une pièce ayant la forme d'une plaque composée de fibres liées les unes aux autres, l'ensemble restant perméable à l'air. Les fibres peuvent être des fibres naturelles, animales, végétales ou minérales, ou des fibres en matériau synthétique, telles que les polymères utilisés généralement pour la fibre synthétique par exemple les polymères d'acryl. Parmi les procédés les plus fréquemment utilisés pour la réalisation de pièces de feutre, on connaît principalement l'aiguilletage, ainsi que le foulage. Les fibres peuvent être agglomérées par collage au moyen d'un adhésif approprié ou par fusion partielle. Le cas échéant, la liaison des fibres peut être assurée au moyen d'une feuille de soutien monolithique ou tissée servant à l'ancrage des fibres.

De même, pour la réalisation des plaques de bois, on utilisera de préférence des pièces massives sous forme de planches ou des assemblages lamellés et collés.

Comme on le verra plus loin, le ou les assemblages que comporte chaque élément seront de préférence réalisés par un simple collage de chacune des deux plaques sur les deux faces opposées de la pièce de feutre. L'expérience a montré qu'on obtient de cette façon des éléments de construction dont la résistance mécanique est parfaitement adaptée au besoin de la construction.

On va décrire ci-après, à titre d'exemple, quelques formes de réalisation de l'objet de l'invention, en se référant au dessin annexé dont :

la fig. 1 est une vue en perspective arrachée d'une forme d'exécution dans laquelle l'élément comporte un seul assemblage et est destiné à la fabrication de cadres de portes ou de fenêtres,

la fig. 2 est une vue en coupe d'une variante de l'élément de la fig. 1,

la fig. 3 une vue également en coupe d'une autre variante de l'élément de la fig. 1,

la fig. 4 une vue en perspective arrachée et éclatée d'une forme d'exécution dans laquelle chaque élément comporte deux assemblages, à couche isolante intercalaire, un canal pour passage sanitaire et électrique, une garniture de plancher, ainsi qu'une garniture de plafond et constitue un élément de dalle pour la réalisation de dalles plancher-plafond dans une construction immobilière et

la fig. 5 une vue également en perspective arrachée illustrant la réalisation d'une façade dans une construction immobilière au moyen d'éléments selon l'invention comportant chacun deux assemblages formés de deux éléments de base avec leur isolant.

La fig.. 1 représente un assemblage élémentaire servant à constituer des éléments préfabriqués selon l'invention. Il est constitué de deux planches en bois 1 et 2 collées de part et d'autre d'une pièce de feutre 3. Les planches 1 et 2 sont des éléments monolithiques dont les dimensions peuvent être par exemple de l'ordre de 15 cm en largeur et de 10 à 50 mm en épaisseur, la longueur pouvant atteindre en préfabrication, par exemple deux ou trois mètres ou même plus, et l'élément pouvant être débité en segments de longueur voulue au moment de la fabrication. La pièce de feutre 3 aura, suivant les réalisations, entre 2 et 50 mm d'épaisseur. Toutefois, une épaisseur de l'ordre de 3 à 7 mm et de préférence de 5 mm s'est révélée être particulièrement avantageuse en ce qu'elle donne à l'assemblage une résistance à la flexion et au flambage très élevée. Il n'est pas nécessaire que la pièce de feutre soit d'un seul tenant. Elle pourra être fabriquée par l'un quelconque des procédés mentionnés plus haut. Lors de la réalisation de l'assemblage, les deux planches 1 et 2 seront pressées contre la pièce de feutre 3 après encollage des planches et/ou de la pièce de feutre, de façon à assurer la parfaite adhésion des pièces qui la composent. Après prise de la colle, l'élément de construction pourra être calibré et subir les opérations de finition requises comme lors de la fabrication d'une planche en bois massive. Ainsi, on pourra pratiquer dans les deux bords longitudinaux de l'élément des fraisages en saillie ou des rainurages de façon à former la nervure 4 et la gorge 5 donnant un élément d'assemblage du type courant et usité, tel que "rainé-crêté", etc. On a constaté que l'usinage des éléments 4 et 5 à travers la pièce de feutre pouvait être réalisé au moyen de l'outillage de menuiserie usuel, sans varier ni les profondeurs de coupe ni les vitesses de travail.

Les deux planches 1 et 2 peuvent être de n'importe quelle qualité de bois et, suivant le cas, peuvent être revêtues de couches superficielles en matière plastique, en toile, en cuir, en peau, etc.

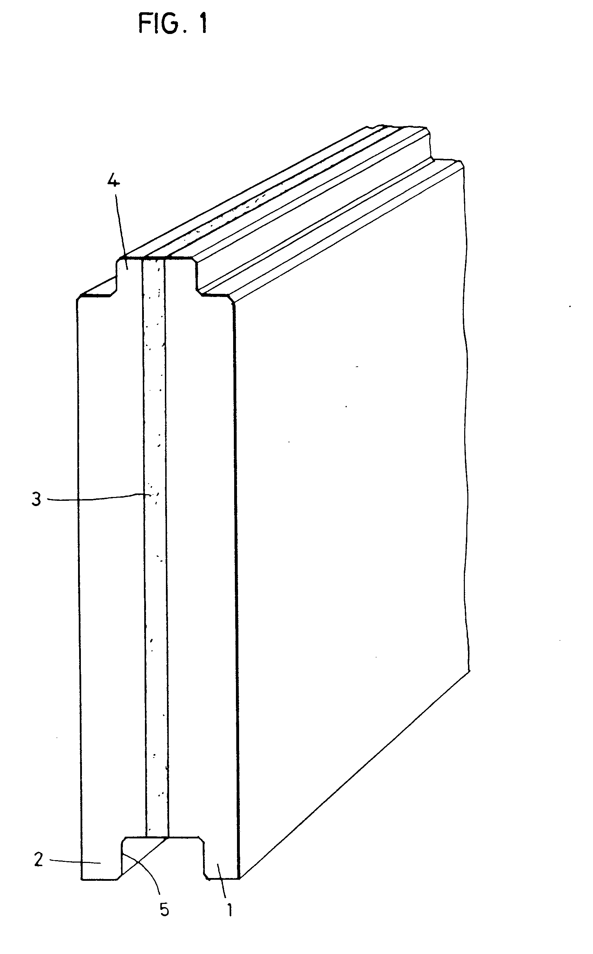

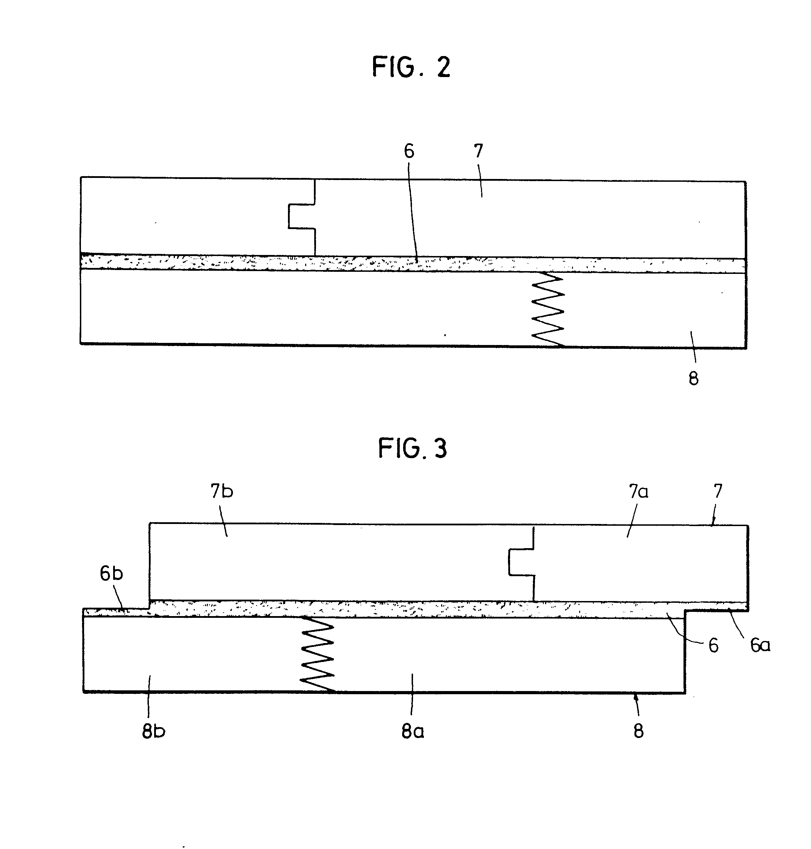

Les fig. 2 et 3 représentent des éléments du même genre que celui de la fig. 1. La pièce de feutre 6 est ici assujettie par collage à deux planches en bois 7 et 8 qui sont elles-mêmes constituées chacune de deux composants 7a, 7b, 8a, 8b assemblés dans un cas (7a, 7b) par rainurage et crêtage, et dans l'autre cas, par des indentations en forme de peigne, toute autre forme d'assemblage éprouvé restant utilisable. Les composants seront assemblés et/ou collés les uns aux autres pour former les pièces 7 et 8. Dans le cas de la fig. 2, l'assemblage de base constitue un élément de profil rectangulaire, tandis que, dans le cas de la fig. 3, on a prévu à chaque extrémité du profil un décrochement de 2 cm de largeur qui laisse apparente la pièce de feutre 6 aux emplacements 6a et 6b, la pièce de feutre étant alors réduite dans son épaisseur. Des éléments tels que ceux des fig. 2 et 3 peuvent servir à la réalisation de portes ou fenêtres, de panneaux, ou même, le cas échéant, de cloisons intérieures ou extérieures dans des constructions immobilières diverses, par exemple dans des bungalows, dans des chalets ou des maisons de vacances.

Des éléments de construction préfabriqués, selon l'invention peuvent également être formés par réunion de plusieurs assemblages de base face contre face, par exemple par collage de la plaque 1 ou 2, 7 ou 8 contre la plaque homologue d'un autre assemblage.

Cette application sera utilisée de préférence dans la fabrication de madriers porteurs de dimensions plus grandes que pour les éléments envisagés jusqu'ici et destinés soit à des cloisons internes, soit à des façades ou des dalles plancher-plafond.

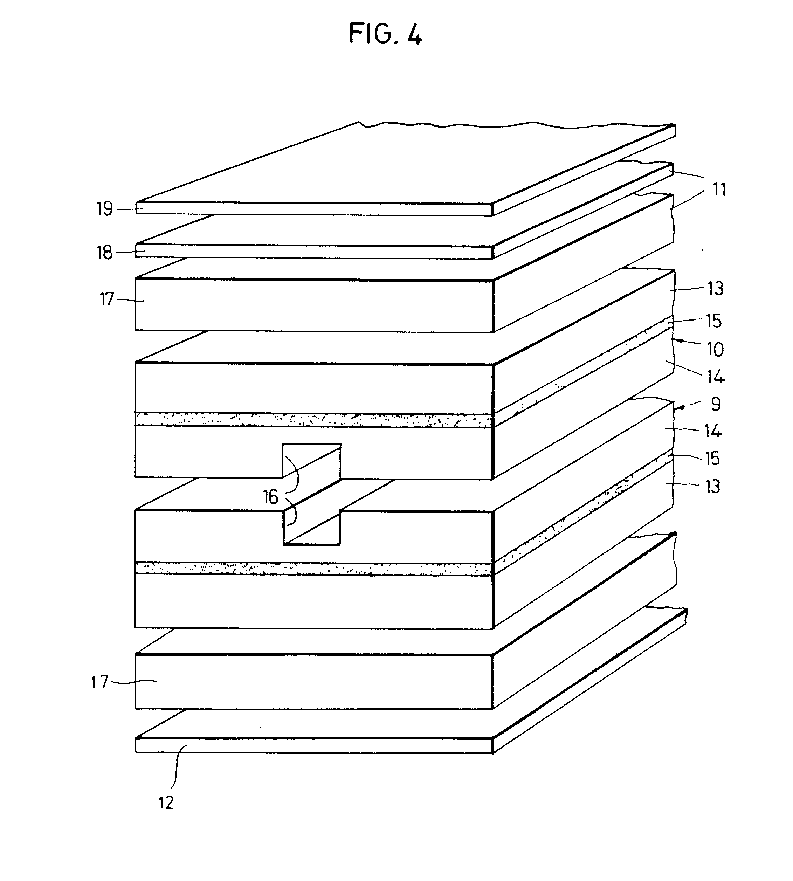

Ainsi, la fig. 4 représente un élément préfabriqué constitué de deux assemblages de base. Ce madrier entièrement préfabriqué peut servir à la réalisation de dalles plancher-plafond dont la pose est extrêmement simplifiée. Les madriers seront mis en place jointivement par fixation entre les deux parois des locaux à couvrir. Ces structures forment directement la dalle de séparation d'étage ou les murs extérieurs d'une maison. Chaque madrier se compose de deux assemblages 9 et 10, d'un revêtement de plancher 11 et d'un revêtement de plafond 12. Les deux assemblages 9 et 10 sont de même structure. Ils comprennent chacun deux plaques 13 et 14 et une pièce de feutre intercalaire 15. Les dimensions peuvent naturellement varier de cas en cas. Les planches 13 et 14 seront liées à la pièce de feutre intercalaire par collage comme dans l'assemblage des fig. 1 à 3.

On peut envisager de munir les planches telles que 13 et 14 de logements dans une de leurs faces. Les madriers sont alors formés par collage des planches le long des bords des logements. Des pièces de feutre sont placées sans collage, flottantes dans les logements. Cette solution permet, dans certains cas, une meilleure isolation de la construction.

A la fig. 4, les plaques 14 présentent dans leur face externe une rainure 16 qui s'étend au centre de leur largeur et sur toute leur longueur. Pour réaliser le madrier décrit, les deux assemblages 9 et 10 sont collés l'un contre l'autre de façon que les deux rainures 16 se trouvent face à face et forment un canal longitudinal au centre du madrier. Ce canal peut servir de logement à des tuyauteries d'eau ou de gaz ou à des conducteurs électriques. On remarque qu'il se trouve enfermé entre deux couches d'isolant.

Chaque madrier (9, 10) pourra former tel quel un élément de dalle plancher-plafond. Selon les cas, il sera garni au moment de la fabrication d'une plaque 11 de revêtement de plancher. Ce revêtement de plancher peut être une planche 17, avec ou sans couche isolante 15, en feutre ou autre matériau isolant, collée ou jointe entre le madrier (9, 10) et la planche 17. Celle-ci peut être en bois ou un matériau d'une autre composition. Sur le plancher 17 peut venir se fixer un tapis de fond 18, fixé par exemple par collage. Le tapis de fond 18 peut aussi être appliqué directement sur le madrier (9, 10).

Sur la planche 17 peut venir se fixer un parquet 19 fixé par exempler par collage. Entre la planche 17 et le parquet 19, un isolant 15 en feutre ou autre matériau isolant peut être collé ou fixé. Le parquet 19 peut également être fixé par collage ou tout autre procédé défini ci-dessus, directement sur le madrier (9, 10) avec ou sans couche isolante intercalaire 15.

Ce revêtement de parquet sera d'un type quelconque, en chêne ou en un autre bois ou éventuellement en plastique ou autre matériau utilisé comme parquet.

Finalement, le revêtement de plafond 12 peut être formé par des pièces de bois lamellées et collées ou contreplaquées, par des plaques de revêtement en matière plastique ou par toute autre structure. Ces éléments 12 se fixeront de préférence par collage sous le madrier (9, 10) soit la planche 17 de l'assemblage 9.

Ainsi, la pose des dalles plancher-plafond et la réalisation des revêtements deviennent des opérations extrêmement simplifiées puisqu'il suffit de mettre en place les éléments de construction préfabriqués qui se présentent sous la forme de madriers composites partiellement ou entièrement garnis.

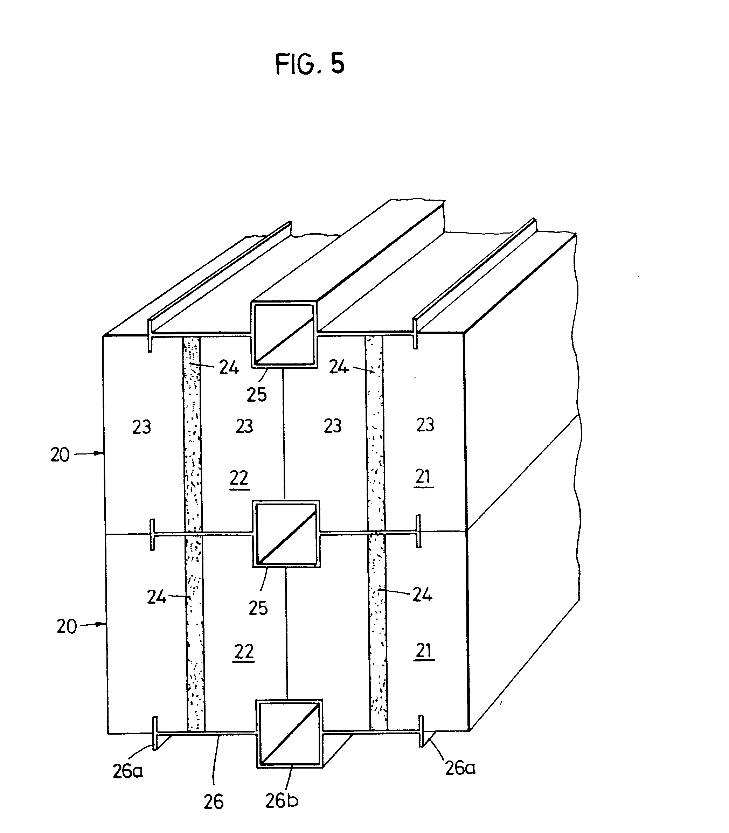

La fig. 5 représente une composition d'assemblages selon une autre forme d'exécution. Les deux éléments préfabriqués 20 visibles à cette figure, comprennent chacun deux assemblages de base 21 et 22 formés chacun de deux plaques 23 et d'une pièce de feutre intercalaire 24. Chaque élément 20 forme un madrier comprenant deux assemblages de base, collés l'un contre l'autre. Des rainures 25, analogues aux rainures 16, seront usinées au centre des faces supérieures et/ou inférieures de chaque madrier 20, de sorte que lors de la réalisation de la cloison par empilement des éléments 20, il se formera au centre de la cloison entre les deux pièces de feutre des canaux dirigés horizontalement et permettant le passage des conduites, etc. D'autre part, les pièces de feutre 24 se trouveront placées bout à bout et constitueront des barrières thermiques continues.

Pour assurer la cohésion de la cloison, des profilés 26 seront placés entre chaque couche de madriers 20. Ces profilés dont la forme est visible à la fig. 5, présentent à leur extrémité des ailes 26a engagées dans des fentes ménagées dans les assemblages de base 21, 22. Dans leur partie centrale, ils présentent une structure de tube 26b qui s'ajuste aux rainures 25, de sorte que les

0018328

canaux formés par les rainures 25 sont blindés par la matière du profilé.

Les profilés 26 pourront être en aluminium ou autre métal léger ou en un matériau présentant une meilleure isolation thermique que l'aluminium. L'utilisation d'un tel matériau n'est toutefois pas indispensable, car on a constaté que la présence de profilés 26 en aluminium dans une cloison construite au moyen des éléments 20 ne diminuait en rien les bonnes qualités de l'isolation thermique de la cloison. En bloquant les joints entre les éléments 20, ils participent à l'isolation thermique de l'ensemble.

Les éléments décrits peuvent aussi permettre de réaliser des toitures. Ils peuvent également servir à la réalisation des piliers porteurs dans des constructions qui sont ensuite cloisonnées au moyen de parois légères.

On voit donc que de nombreuses formes de réalisation sont possibles et des éléments à meilleur pouvoir d'isolation thermique et phonique que le traditionnel bois massif réalisés selon l'une ou l'autre des formes d'exécution décrites ci-dessus peuvent être utilisés dans toutes sortes de constructions immobilières, y compris les fermes, villas et immeubles.

Les essais ont montré qu'un madrier formé de deux assemblages de base 9 et 10 avec feutre intercalaire collé présentait une résistance à la flexion largement supérieure à celle d'un madrier massif de mêmes dimensions. Ces éléments de construction permettent de réaliser des cloisons ou des éléments de structure porteurs pour bâtiments qui, pour un prix de construction réduit, et une épaisseur relativement faible, présentent simultanément une capacité d'isolation thermique et une qualité d'isolation phonique très élevées.

Bien entendu, dans d'autres formes de réalisation, on peut également obtenir des madriers constituant des éléments de construction préfabriqués pour murs ou dalles en utilisant plus de deux assemblages de base tels que représentés à la fig. 1. Ainsi, trois assemblages de base collés face contre face constituent aussi un madrier selon l'invention.

On a également constaté que des madriers présentant de bonnes qualités d'isolation thermique et phonique et une grande résistance mécanique, peuvent être réalisés en fixant deux assemblages de base tels que ceux représentés à la fig. 1, de part et d'autre d'une plaque formée d'agglomérés de liège, par exemple de particules de liège assemblées par collage. L'épaisseur de cette plaque intercalaire de liège peut varier entre 2 et 8 cm, mais elle sera de préférence de 4 à 6 cm. Ici également, la liaison entre la plaque de liège aggloméré et les faces internes des deux assemblages de base qui constituent la structure du madrier, sera réalisée de préférence par collage.

Un autre élément important auquel il convient de prendre garde lors de la fabrication des éléments de construction décrits est la réalisation du collage. On a constaté que l'utilisation d'une colle rendue liquide par chauffage à haute fréquence permettait d'éviter la diffusion du liant entre les fibres. On obtenait ainsi des assemblages dans lesquels le réseau des fibres constituant le feutre n'était pas bloqué, de sorte que cette matière gardait toute sa capacité d'isolation. Bien que le feutre reste alors entièrement perméable, les plaques de bois qui constituent les faces opposées de l'élément de construction assurent l'étanchéité tout en maintenant la capacité d'isolation.

Bien entendu, les extrémités des dalles, des murs ou des parois seront garnies de pièces de fermeture obturant l'affleurement du feutre afin d'assurer l'étanchéité de l'ensemble.

REVENDICATIONS

1.   Elément de construction préfabriqué, notamment pour la réalisation de murs ou de dalles plancher-plafond, caractérisé en ce qu'il comporte au moins un assemblage porteur à haute capacité d'isolation phonique et thermique, formé d'une pièce de feutre et de deux plaques de bois rigides qui recouvrent les faces opposées de la pièce de feutre, et qui sont liées à celle-ci par collage.

2.   Elément selon la revendication 1, caractérisé en ce que l'épaisseur de la pièce de feutre est plus faible que celle de chacune des deux plaques de bois.

3.   Elément selon la revendication 1 ou la revendication 2, caractérisé en ce que dans chaque assemblage, les deux plaques de bois rigides sont elles-mêmes constituées de lames assemblées les unes aux autres.

4.   Elément selon la revendication 1 ou la revendication 2, caractérisé en ce qu'il constitue un madrier formé d'au moins deux assemblages porteurs de mêmes dimensions en plan liés l'un à l'autre.

5.   Elément selon la revendication 4, caractérisé en ce que les assemblages qui constituent le madrier sont liés les uns aux autres par collage face à face.

6.   Elément selon la revendication 4, caractérisé en ce qu'une matière isolante est intercalée entre les assemblages constituant les dits madriers.

7.   Elément selon l'une des revendications 4, 5 ou 6, caractérisé en ce qu'il est équipé sur au moins une de ses faces d'un plafond de garniture.

8.   Elément selon l'une des revendications 4, 5 ou 6, caractérisé en ce qu'il est équipé sur une de ses faces d'une plaque de revêtement de plancher.

9.   Elément selon la revendication 8, caractérisé en ce que ladite plaque de revêtement de plancher est un tapis de fond, une plaque de parquet ou un revêtement de

13 0018328

matière plastique.

10. Elément selon l'une des revendications 4, 5 ou 6, caractérisé en ce que les assemblages présentent des rainures longitudinales correspondantes qui forment dans le madrier des canaux destinés au passage de conduits sanitaires, électriques, etc.

11. Elément selon l'une des revendications 4, 5 ou 6, caractérisé en ce qu'il constitue un madrier formé de deux assemblages liés face à face et dont la tranche présente des rainures agencées de manière à permettre la pose de profilés métalliques assurant la cohésion des madriers, ceux-ci étant empilés sur leur tranche, de façon à former un mur.

12. Elément selon la revendication 6, constituant un madrier formé de deux assemblages, caractérisé en ce que les plaques de bois internes de chaque assemblage présentent des faces opposées qui sont planes et en ce qu'une couche de liège est intercalée entre les deux assemblages, la liaison étant réalisée par collage.

FIG. 1

FIG. 2

FIG. 3

## FIG. 4

FIG. 5